# EUROPÄISCHE PATENTANMELDUNG

(11) **EP 3 281 891 A1**
(43) Veröffentlichungstag der Anmeldung: **14.02.2018**
(21) Anmeldenummer: 17184409.5
(22) Anmeldetag: 02.08.2017
(51) Int. Cl.: B65G 47/53, B65G 47/82, B65G 47/84

(54) **ÜBERGABESYSTEM MIT SCHIEBEVORRICHTUNG FÜR STÜCKGÜTER**

(30) Priorität: 10.08.2016 CH 10292016
(71) Anmelder: WRH Walter Reist Holding AG, 8272 Ermatingen (CH)
(72) Erfinder: Mäder, Carl Conrad, 8335 Hittnau (CH)
(74) Vertreter: Frei Patent Attorneys

(57) **Zusammenfassung**

Übergabesystem für Stückgüter (8A, 8B), umfassend eine Schiebevorrichtung (3, 23) und einen Hauptfördener (1) mit einem Förderbereich (2). Die Schiebevorrichtung (3, 23) weist ein erstes Schieborgan (4, 24) und ein zweites Schieborgan (5, 25) auf. Das Übergabesystem weist in Schieberichtung (S) hinter dem Förderbereich (2) eine Bestückungszone (6) auf. In Ausgangsposition der Schiebevorrichtung (3, 23) sind das erste Schieborgan (4, 24) zwischen dem Förderbereich (2) und der Bestückungszone (6), und das zweite Schieborgan (5, 25) in Schieberichtung hinter der Bestückungszone (6) angeordnet. In Endposition der Schiebevorrichtung (3, 23) sind das erste Schieborgan (4, 24) in Schieberichtung (S) vor dem Förderbereich (2) und das zweite Schieborgan (5, 25) zwischen dem Förderbereich (2) und der Bestückungszone (6) angeordnet. In der Schiebevorrichtung (3, 23) ist das erste Schieborgan (4, 24) in Schieberichtung (S) zwischen der Ausgangsposition und der Endposition fix beabstandet zum und vor dem zweiten Schieborgan (5, 25) angeordnet.

## Beschreibung

Die Erfindung bezieht sich auf das Gebiet von Übergabesystemen mit Schiebevorrichtung für eine Übergabe von Stückgütern an einen Förderer, sowie auf das Gebiet von Verfahren zur Übergabe von Stückgut an einen Förderer durch eine Schiebevorrichtung.

Förderer werden unter Anderem zum Fördern von Stückgut verwendet. Stückgut an den Förderer zu übergeben um es mit dem Förderer über eine vorbestimmte Strecke zu fördern ist ein weit verbreitetes Vorgehen. Dazu existieren bereits verschiedene Vorrichtungen und Systeme. Ist das Stückgut im Wesentlichen durch Haftreibung und somit durch eine Anpresskraft an den Förderer mit dem Förderer verbunden, sind zur Übergabe an den Förderer Schiebevorgänge und Schiebevorrichtungen weit verbreitet. Dabei werden Schieber benutzt, welche Stückgut an den Förderer übergeben, indem das Stückgut auf die Förderfläche des Förderers geschoben wird. Ein derartiges Übergabesystem ist beispielsweise aus EP 0 391 301 A1 bekannt.

Die bekannten Schieber laufen bei jedem Schiebevorgang Gefahr, das dem Förderer zu übergebende Stückgut in bereits auf dem Förderer befindliches Stückgut zu schieben. Die Schieber können auch mit auf dem Förderer befindlichen Stückgütern kollidieren, nachdem sie Stückgut dem Förderer übergeben haben und wieder aus einem Förderbereich des Förderers herausbewegt werden sollen. Dabei kann Stückgut, die Schiebevorrichtung, der Förderer und/oder andere Teile des Übergabesystems bzw. Teile der das Übergabesystem umgebenden Einrichtungen beschädigt werden. Das Fördern durch den Förderer kann gestört oder sogar verhindert werden.

Das Stückgut muss bei bekannten Schiebern meistens zwischen bereits auf dem Förderer befindliche Stückgüter geschoben werden. Der Förderer muss dazu entsprechend langsam bewegt bzw. gegebenenfalls sogar mindestens zeitweise abgebremst werden, und/oder Abstände zwischen Stückgütern auf dem Förderer müssen entsprechend gross gewählt werden. Die Auslastung und Förderkapazität des Förderers können also reduziert sein. Weiter müssen der Förderer und die Schieber genau gesteuert und überwacht werden. Dies ist aufwändig, kompliziert und technisch anfällig.

Es ist deshalb Aufgabe der Erfindung, ein Übergabesystem bzw. ein Verfahren zur Übergabe von Stückgut an einen Förderer der eingangs genannten Art zu schaffen, welches mindestens einen der oben genannten Nachteile mindestens teilweise behebt.

Diese Aufgabe lösen ein Übergabesystem und ein Verfahren mit den folgend beschriebenen Merkmalen.

Übergabesystem für Stückgüter, welches eine Schiebevorrichtung und einen Hauptförderer mit einem Förderbereich umfasst. Dabei weist die Schiebevorrichtung mindestens ein erstes Schieborgan und ein zweites Schieborgan auf, und das Übergabesystem weist in einer Schieberichtung hinter dem Förderbereich eine Bestückungszone auf. In einer Ausgangsposition der Schiebevorrichtung ist das erste Schieborgan in Schieberichtung zwischen dem Förderbereich und der Bestückungszone, und das zweite Schieborgan in Schieberichtung hinter der Bestückungszone angeordnet. In einer Endposition der Schiebevorrichtung, welche in Schieberichtung vor der Ausgangsposition angeordnet ist, ist das erste Schieborgan in Schieberichtung vor dem Förderbereich und das zweite Schieborgan in Schieberichtung zwischen dem Förderbereich und der Bestückungszone angeordnet. Auf diese Weise kann bei einer Bewegung der Schiebevorrichtung von der Ausgangsposition zur Endposition Stückgut von der Bestückungszone an den Förderbereich übergeben und Stückgut vom Förderbereich weg gegeben werden. In der Schiebevorrichtung ist das erste Schieborgan in Schieberichtung zwischen der Ausgangsposition und der Endposition fix beabstandet zum zweiten Schieborgan angeordnet und zudem vor dem zweiten Schieborgan angeordnet, sodass jede Bewegung des ersten Schieborgans auf einem Weg von der Ausgangsposition zur Endposition dieselbe Bewegung des zweiten Schieborgans bewirkt.

Die Schiebevorrichtung ist also derart ausgebildet, dass bei einer Schiebebewegung der Schiebevorrichtung von der Ausgangsposition zur Endposition das erste und das zweite Schieborgan gleichzeitig eine Bewegung machen, durch welche einerseits Stückgut durch den ersten Schieber aus dem Förderbereich vom Hauptförderer weg gegeben werden kann und andererseits durch den zweiten Schieber Stückgut von der Bestückungszone an den Hauptförderer (genauer gesagt in den Förderbereich) übergeben werden kann. Somit erlaubt das Übergabesystem durch die eine Schiebebewegung der Schiebevorrichtung eine Übergabe von Stückgut an den Hauptförderer und ein Wegschieben von Stückgut vom Hauptförderer.

Dabei kollidieren die beiden Stückgüter nicht miteinander, weil das erste Schieborgan in Ausgangsposition zwischen dem Stückgut im Förderbereich und dem Stückgut in der Bestückungszone angeordnet ist und auch während der Schiebebewegung zwischen den beiden Stückgütern verbleibt. Das erste Schieborgan trennt somit ein dem Hauptförderer zu übergebendes Stückgut von Stückgut im Förderbereich, welches gegebenenfalls vom Hauptförderer weg gegeben werden kann.

Insbesondere ist das erste Schieborgan zwischen zwei benachbarten Stückgütern angeordnet, und das zweite Schieborgan ist auf einer entgegengesetzten Seite eines dieser zwei benachbarten Stückgüter angeordnet.

Insbesondere sind das erste Schieborgan und das zweite Schieborgan benachbart. Mit anderen Worten ist ein Raum zwischen dem ersten Schieborgan und dem zweiten Schieborgan frei von weiteren Schieborganen.

Die Schiebevorrichtung umfasst also zwei in Schieberichtung hintereinander angeordnete Schieberäume, welche durch das erste Schieborgan voneinander getrennt sind. In diesen Schieberäumen verbleiben Stückguter jeweils während der Schiebebewegung und können räumlich voneinander getrennt relativ zum Hauptförderer verschoben werden.

Das Übergabesystem verhindert somit, dass dem Hauptförderer zu übergebendes Stückgut mit bereits im Förderbereich des Hauptförderers befindlichem Stückgut kollidiert. Denn durch das erste Schieborgan wird allenfalls im Förderbereich befindliches Stückgut vom Hauptförderer weg geschoben. Auf diese Weise wird dem (dem Hauptförderer zu übergebenden) Stückgut Platz geschaffen.

Auch die Gefahr einer Kollision der Schiebevorrichtung mit nachfolgendem, bereits auf dem Hauptförderer befindlichem Stückgut wird verringert, weil ein bereits bestehender Abstand zwischen auf dem Hauptförderer aufeinander folgenden Stückgütern durch ein Ersetzen eines Stückguts an einer Stelle keine Verringerung des Abstandes bedeutet. Der Schiebevorrichtung könnte in diesem Fall genug Platz und Zeit zur Verfügung stehen, um nicht mit anderem Stückgut im Förderbereich zusammenzustossen.

Beschädigungen von Stückgut, Schiebevorrichtung, Förderer und/oder anderen Teile des Übergabesystems bzw. Teile der das Übergabesystem umgebenden Einrichtungen können durch die oben beschriebene Vorrichtung und das dazugehörige Verfahren vermieden werden. Das Fördern kann auch bei einer Übergabe von Stückgut an den Hauptförderer ungestört weitergeführt werden.

Das Stückgut muss auch nicht in eine Lücke zwischen bereits auf dem Hauptförderer befindlichen Stückguts eingeführt werden. Auf eine grosse Lücke bzw. weite Abstände zwischen benachbarten Stückgütern kann verzichtet werden. Der Hauptförderer kann bei geringen Abständen zwischen Stückgut trotz Übergabe von Stückgut an den Hauptförderer mit ungebremster Geschwindigkeit betrieben werden. Auch eine Überwachung und Steuerung des Übergabesystems kann dank der erfindungsgemässen Schiebevorrichtung mit den beiden Schieborganen einfacher ausgebildet und durchgeführt werden. Auf die Überwachung und Steuerung des Übergabesystems kann insbesondere auch ganz verzichtet werden. Dies vereinfacht das Übergabesystem, macht es robust und kostengünstig in Herstellung und Betrieb.

Wird bei derselben Schiebebewegung der Schiebevorrichtung einerseits ein erstes Stückgut durch das erste Schieborgan vom Hauptförderer weg gegeben und andererseits ein zweites Stückgut durch das zweite Schieborgan von der Bestückungszone an den Hauptförderer übergeben, so ersetzt das zweite Stückgut das erste Stückgut im Förderbereich des Hauptförderers. Das zweite Stückgut wird also nach dem Ersetzen im Wesentlichen an derselben Stelle im Förderbereich platziert und weiterbefördert, wie es bis vor dem Ersetzen für das erste Stückgut der Fall gewesen ist.

Das Ersetzen von Stückgut auf dem Hauptförderer durch die Schiebevorrichtung hat den Vorteil, dass der Hauptförderer maximal ausgelastet werden kann. Die Förderkapazität des Hauptförderers kann vollständig ausgenutzt werden, weil kein ungenutzter Platz für Stückgut im Förderbereich entsteht. Mit anderen Worten werden nicht zuerst Stückgüter vom Hauptförderer weggegeben, dann leere Plätze im Förderbereich weiterbefördert und erst später wieder durch Übergaben von Stückgut an den Hauptförderer befüllt. Sondern Stückgut wird in optimalem Abstand zueinander bis zur Schiebevorrichtung befördert und dort mit anderen Stückgut ersetzt, wobei der optimale Abstand zwischen Stückgut auf dem Hauptförderer erhalten bleibt. Die Auslastung des Hauptförderers und die Effizienz des Übergabesystems werden dadurch gesteigert.

Durch das Ersetzen von Stückgut kann derselbe Hauptförderer für ein Hin- und Wegfördern an einen gegebenen Ort verwendet werden. Die Anzahl von Förderern kann somit reduziert werden. Das Ersetzen erlaubt ein einfaches paralleles Be- und Entladen des Hauptförderers in einer einzigen Schiebebewegung, also einem einzigen Arbeitsschritt, und mit nur einer einzigen Schiebevorrichtung. Auf separates Entladen (vom Hauptförderer weg geben) und Beladen (dem Hauptförderer übergeben) von Stückgut durch verschiedene Vorrichtungen und/oder in verschiedenen Arbeitsschritten kann verzichtet werden. Das Ersetzen von Stückgut auf dem Hauptförderer vereinfacht das Übergabesystem, macht es robust und kostengünstig in Bau und Betrieb.

Insbesondere für Hauptförderer, welche Stückgüter zu Bearbeitungszonen fördern und auch wieder davon hinweg, ist ein Ersetzen von Stückgütern effizient. Beispielsweise kann derselbe Hauptförderer leere Gebinde (welche auch als Stückgut betrachtet werden) zu einer Befüllstation fördern, wo diese Gebinde befüllt werden und als volle Gebinde wieder an den Hauptförderer übergeben werden, indem die vollen Gebinde die leeren Gebinde ersetzen. Die vollen Gebinde werden dann von demselben Hauptförderer weitergefördert, welcher die leeren Gebinde an derselben Stelle des Förderbereichs bereits zur Befüllstation gefördert hat.

Der Hauptförderer ist ein Förderer mit einem Förderbereich. Der Förderbereich ist ein Bereich des Hauptförderers, in welchem sich Stückgut während des Förderns mit dem Hauptförderer befinden kann. Das Stückgut ist im Wesentlichen durch Haftreibung mit dem Hauptförderer im Förderbereich gehalten. Somit liegt das Stückgut im Wesentlichen durch eine Anpresskraft (auch Andruckkraft genannt) auf dem Hauptförderer auf. Diese Anpresskraft kann die Gravitationskraft, Gewichtskraft und/oder Zentripetalkraft umfassen. Der Förderbereich des Hauptförderers kann im Wesentlichen horizontal verlaufen. Durch quer zur Anpresskraft des Stückguts gerichtete Kraft kann das Stückgut von der Haftreibung in Gleitreibung versetzt werden und dadurch verschoben werden.

Mit Stückgut ist ein einzelnes räumlich ausgebildetes Objekt gemeint, welches von einem weiteren Stückgut separat ausgebildet ist. Stückgut lässt sich einzeln am Stück fördern. Stückgut ist beispielsweise auch ein Gefäss, ob voll oder leer. Auch eine Verpackungseinheit, beispielsweise ein gebundener Stapel, ist Stückgut. Kisten, Kartons, Körbe, Taschen und andere Objekte, ob nun einstückig oder mehrstückig und zusammengesetzt, ob leer oder teilweise oder ganz gefüllt, sind Stückgut.

Die Schiebevorrichtung ist eine Vorrichtung, welche zum Schieben von Stückgut ausgebildet ist. Die Schiebevorrichtung umfasst mindestens ein erstes und ein zweites Schieborgan. Ein Schieborgan ist ein Vorrichtungselement, welches dazu ausgebildet ist, Stückgut zu schieben. Das Schieborgan kann auf das Stückgut eine Kraft ausüben, um das Stückgut aus der Haftreibung mit dem Hauptförderer in Gleitreibung zu versetzen und dadurch zu bewegen, das heisst zu verschieben.

Ein Schieborgan kann beispielsweise durch Kraftschluss Stückgut schieben. Insbesondere umfasst ein Schieborgan einen Anschlag für Stückgut, um das Stückgut kontaktschlüssig am Anschlag angeordnet durch Bewegung des Schieborgans zu bewegen und dadurch das Stückgut zu schieben.

Ein Schieborgan kann optional auch durch elektromagnetische Felder, magnetische Felder, elektrische Felder, Fluidabgabe wie etwa gerichtete Druckluftabgabe oder andere physikalische Effekte Kraft auf das Stückgut ausüben, um das Stückgut zu schieben.

Die Schieberichtung der Schiebevorrichtung ist die Richtung, in welche das Stückgut beim Bewegen der Schiebevorrichtung (und dadurch auch des ersten und zweiten Schieborgans) von der Ausgangsposition in die Endposition geschoben wird. Insbesondere ist die Schieberichtung gerade ausgebildet und zeigt von der Ausgangsposition zur Endposition eines Schieborgans der Schiebevorrichtung.

Die Bestückungszone ist ein Bereich des Übergabesystems, in welchem Stückgut zur Verfügung gestellt wird, um vom zweiten Schieborgan dem Hauptförderer übergeben zu werden. Die Bestückungszone ist also in Schieberichtung vor dem zweiten Schieborgan und hinter dem ersten Schieborgan angeordnet, wenn sich die Schiebevorrichtung in Ausgangsposition befindet. Die Bestückungszone kann manuell, halbautomatisch oder automatisch mit Stückgut versehen werden.

Weitere Ausführungsformen können die folgenden optionalen Merkmale ausweisen. Dabei sind Merkmale der Verfahrensansprüche sinngemäss mit den Vorrichtungsansprüchen kombinierbar und umgekehrt.

Optional ist die Schieberichtung der Schiebevorrichtung schräg zu einer Förderrichtung des Hauptförderers angeordnet.

Schräg bedeutet, dass die Schieberichtung die Förderrichtung schneidet. Die Schieberichtung ist also schräg zur Förderrichtung angeordnet und kreuzt die Förderrichtung. Eine schräge Anordnung von Schieberichtung und Förderrichtung erlaubt eine einfache und rasche Übergabe von Stückgut an den Förderer.

Unter schräg kann beispielsweise auch verstanden werden, dass die Schieberichtung zur Förderrichtung von einer rechtwinkligen Anordnung maximal um 45 Grad abweicht. Insbesondere weicht die Schieberichtung zur Förderrichtung von einer rechtwinkligen Anordnung maximal um 30 Grad ab. Die Schieberichtung kann zur Förderrichtung von einer rechtwinkligen Anordnung auch maximal um 15 Grad abweichen.

Insbesondere ist die Schieberichtung der Schiebevorrichtung rechtwinklig zur Förderrichtung des Hauptförderers angeordnet.

Als optionales Merkmal ist die Bestückungszone in einem Förderbereich eines Hinförderers angeordnet.

Die Bestückungszone kann von einem Förderbereich eines Hinförderers umfasst sein. Durch einen Hinförderer kann die Bestückungszone einfach und effizient bestückt werden. Ein Hinförderer kann als Förderer ausgebildet sein. Ein Hinförderer kann auch als Lift ausgebildet sein. Der Hinförderer kann eine umlaufende Förderbahn umfassen. Der Hinförderer kann auch eine offene Förderbahn mit Endpunkten umfassen. Der Hinförderer kann entlang derselben Förderbahn Stückgüter hin und her bewegen. Der Hinförderer kann entlang derselben Förderbahn Stückgüter auch nur in eine Richtung fördern. Der Hinförderer kann die Bestückungszone manuell gesteuert, halbautomatisch gesteuert oder vollautomatisch mit Stückgut versehen.

Alternativ kann die Bestückungszone frei von einem Hinförderer ausgebildet sein. Die Bestückungszone kann auch neben einem Hinförderer ausgebildet sein.

Optional ist in einem Bereich zwischen der Ausgangsposition und der Endposition des zweiten Schieborgans eine Hinförderrichtung des Hinförderers im Wesentlichen rechtwinklig zur Förderrichtung des Hauptförderers angeordnet.

Mit Hinförderrichtung ist die Förderrichtung des Hinförderers bezeichnet. Das Stückgut wird durch den Hinförderer in Hinförderrichtung in die Bestückungszone gefördert.

Mit Bereich zwischen Ausgangsposition und Endposition des zweiten Schieborgans ist ein Bereich des Hinförderer und des Hauptförderers gemeint, in welchem darauf angeordnetes Stückgut durch das zweite Schieborgan bei der Schiebebewegung von der Ausgangsposition zur Endposition verschoben werden kann.

Beispielsweise weist eine Richtung im Wesentlichen in eine Referenzrichtung, wenn die Richtung nicht mehr als maximal 30 Winkelgrade von der Referenzrichtung abweicht. Insbesondere heisst das, dass die Richtung von der Referenzrichtung nicht mehr als 15 Winkelgrade abweicht. Die Richtung weicht von der Referenzrichtung beispielsweise nicht mehr als maximal 5 Winkelgrade ab, um im Wesentlichen gleich zu sein.

Beispielsweise ist die Hinförderrichtung sowohl im Wesentlichen senkrecht zur Förderrichtung des Hauptförderers als auch im Wesentlichen senkrecht zur Schieberichtung der Schiebevorrichtung.

Beispielsweise ist die Hinförderrichtung im Wesentlichen senkrecht zur Förderrichtung des Hauptförderers und im Wesentlichen parallel zur Schieberichtung der Schiebevorriclltung.

Optional ist in einem Bereich zwischen der Ausgangsposition und der Endposition des zweiten Schieborgans die Hinförderrichtung des Hinförderers im Wesentlichen entgegengesetzt zur Förderrichtung des Hauptförderers angeordnet.

Als optionales Merkmal ist in einem Bereich zwischen der Ausgangsposition und der Endposition des zweiten Schieborgans die Hinförderrichtung des Hinförderers im Wesentlichen parallel zur Förderrichtung des Hauptförderers angeordnet.

Optional umfasst die Schiebevorrichtung eine geschlossene Umlaufbahn, entlang welcher die mindestens zwei Schieborgane bewegt werden. Ein Teil dieser Umlaufbahn, welcher zwischen der Ausgangsposition und der Endposition liegt, ist frei von Schnittpunkten mit der restlichen Umlaufbahn.

Mit anderen Worten weist die Schiebevorrichtung eine geschlossene Umlaufbahn für die Schieborgane auf, welche von den Schieborganen in gleicher Umlaufrichtung durchlaufen werden kann, um von der Ausgangsposition in die Endposition zu gelangen und danach wieder in die Ausgangsposition. Dabei kreuzen die Schieborgane auf ihrem Weg zurück von der Endposition hin zur Ausgangsposition nicht den Weg, welche die Schieborgane in der Schiebebewegung von der Ausgangsposition hin zur Endposition nehmen. Auf diese Weise können die Schieborgane von der Endposition zurück zur Ausgangsposition bewegt werden, ohne dass sie dabei möglicherweise mit Stückgut im Förderbereich und/oder in der Bestückungszone kollidieren.

Alternativ weist die Schiebevorrichtung eine geschlossene Umlaufbahn für die Schieborgane auf, bei welcher sich die Bahn der Schiebebewegung und der Weg von der Endposition zurück zur Ausgangsposition kreuzen. Die Schiebevorrichtung kann auch eine offene Umlaufbahn mit Endpunkten umfassen.

Die Schieborgane können entlang derselben Umlaufbahn hin und her bewegt werden. Die Schieborgane können entlang derselben Umlaufbahn auch nur in eine Richtung bewegt werden.

Als optionales Merkmal umfasst das Übergabesystem einen kontinuierlichen Antrieb für die Schiebevorrichtung. Insbesondere umfasst das Übergabesystem einen sequentiellen Antrieb für die Schiebevorrichtung.

Ein kontinuierlicher Antrieb für die Schiebevorrichtung ist einfach und stabil herstellbar und betreibbar. Ein sequentieller Antrieb kann einfach angesteuert und gezielt eingesetzt werden.

Alternativ kann das Übergabesystem die Schiebevorrichtung durch einen Antrieb ausserhalb des Übergabesystems antreiben. Beispielsweise kann die Schiebevorrichtung vom gleichen Antrieb wie der Hauptförderer angetrieben werden (dieser kann vom Übergabesystem umfasst sein oder sich ausserhalb des Übergabesystems befinden). Die Schiebevorrichtung kann beispielsweise auch durch einen Hinförderer oder dessen Antrieb angetrieben werden.

Optional umfasst das Übergabesystem ein Steuermittel für die Schiebevorrichtung und ein Grössenerfassungsmittel für Stückgüter im Förderbereich des Hauptförderers. Dabei bekommt das Steuermittel eine Grösseninformation des Grössenerfassungsmittels zur Verfügung gestellt. Unter Berücksichtigung dieser Grösseninformation ist das Steuermittel imstande, eine Bewegung der Schiebevorrichtung wahlweise auszulösen.

Das Grössenerfassungsmittel ist imstande, eine Grösseninformation von Stückgut zu ermitteln. Die Grösseninformation umfasst Angaben zur physischen Ausdehnung des Stückguts, also zur Grösse des Stückguts. Die Grösseninformation umfasst mindestens eine Information in mindestens einer Raumdimension. Die Grösseninformation kann Informationen zur Grösse des Stückguts in zwei Raumdimensionen umfassen. Insbesondere umfasst die Grösseninformation Informationen zur Grösse des Stückguts in drei Dimensionen.

Die Grösseninformation kann vom Grössenerfassungsmittel durch Messung des Stückguts mit einem Messmittel des Grössenerfassungsmittels ermittelt werden.

Zusätzlich oder alternativ kann das Grössenerfassungsmittel zur Ermittlung der Grösseninformation das Stückgut mit einem Identifizierungsmittel des Grössenerfassungsmittels identifizieren, beispielsweise etwa durch einen Strichcode am Stückgut, ein Erkennung per Funksignal mit dem Stückgut oder durch Kommunikation mit einer Prozesssteuerung, welche die Stückgüter auf dem Hauptförderer überwacht, und durch Anfrage der Identifizierung von der Prozesssteuerung. Nach der Identifizierung kann das Grössenerfassungsmittel auf zur Verfügung gestellte Grösseninformationen von Stückgütern zurückgreifen und die dem identifizierten Stückgut zugeordnete Grösseninformation bereitstellen.

Das Steuermittel ist dazu ausgebildet, die Schiebebewegung der Schiebevorrichtung zu steuern. Das Steuermittel kann dabei auf die Grösseninformation des Grössenerfassungsmittels zurückgreifen und aufgrund der Grösseninformation eine Schiebebewegung der Schiebevorrichtung einzuleiten oder nicht. Die Schiebebewegung kann vom Steuermittel eingeleitet werden, wenn eine Mindestgrösse eines Stückguts gemäss Grösseninformation überschritten ist. Oder die Schiebebewegung wird beispielsweise eingeleitet, wenn eine Grösse eines Stückguts gemäss Grösseninformation zwischen einer Mindestgrösse und einer Maximalgrösse liegt. Oder die Schiebebewegung kann vom Steuermittel eingeleitet werden, wenn keine Grösseninformation vorliegt und beispielsweise kein Stückgut im Förderbereich erwartet wird.

Auf diese Weise kann die Schiebebewegung gezielt ausgelöst werden, um beispielsweise ausgewähltes Stückgut gezielt durch bestimmtes Stückgut zu ersetzen. Es kann auch Stückgut in Lücken zwischen anderen Stückgütern übergeben werden. Die Auslastung des Hauptförderers kann auf diese Weise nach Bedarf gesteuert werden.

Optional umfasst das Übergabesystem ein Steuermittel für die Schiebevorrichtung und ein Grössenerfassungsmittel für Stückgüter der Bestückungszone. Dabei bekommt das Steuermittel eine Grösseninformation des Grössenerfassungsmittels zur Verfügung gestellt. Unter Berücksichtigung dieser Grösseninformation ist das Steuermittel imstande, eine Bewegung der Schiebevorrichtung wahlweise auszulösen.

Grössenerfassungsmittel für Stückgüter der Bestückungszone und Steuermittel weisen dieselben Merkmale und Vorteil wie bereits oben für die Grössenerfassung der Stückgüter im Förderbereich beschrieben aus.

Insbesondere kann das Steuermittel die Schiebebewegung auslösen, wenn die Grösseninformation besagt, dass das Stückgut im Förderbereich im Wesentlichen gleich gross ist wie Stückgut in der Bestückungszone.

Dazu kann beispielsweise Grösseninformation sowohl des Stückguts im Förderbereich als auch Grösseninformation des Stückguts in der Bestückungszone vorliegen und verglichen werden. Es kann aber auch nur mit einem Grössenerkennungsmittel für Stückgüter im Förderbereich gearbeitet werden, welche beispielsweise Stückgüter einer bestimmten Grösse durch das erste Schieborgan vom Hauptförderer weg gibt und diese Stückgüter danach in die Bestückungszone gelangen. Dadurch kann sichergestellt werden, dass nur Stückgüter derselben Grösse vom Hauptförderer weg gegeben werden und/oder dem Hauptförderer übergeben werden. Insbesondere kann auf diese Weise sichergestellt werden, dass nur Stückgüter gleicher Grösse einander im Förderbereich durch eine Schiebebewegung der Schiebevorrichtung ersetzen.

Im Wesentlichen gleich gross kann heissen, dass die Länge in einer Dimension nicht mehr als maximal 20% voneinander abweicht. Insbesondere heisst das, dass die Länge in einer Dimension nicht mehr als 10% voneinander abweicht. Die Abweichung weicht beispielsweise nicht mehr als maximal 5% voneinander ab.

Optional umfasst das Übergabesystem mindestens ein Steuerelement, welches dazu ausgebildet ist, eine Position der Schieborgane relativ zur Umlaufbahn zu verändern.

Insbesondere umfasst das Übergabesystem ein als Kulisse ausgebildetes Steuerelement, wobei die Kulisse ortsfest relativ zur Umlaufbahn der Schieborgane angeordnet ist.

Die Kulisse kann mit einem vom Schieborgan umfassten Kontaktelement in Kontaktschluss treten und das Schieborgan auf diese Weise relativ zur Umlaufbahn auslenken. Das Auslenken relativ zur Umlaufbahn kann beispielsweise ein drehen sein. Das Schieborgan kann durch Kippen relativ zur Umlaufbahn ausgelenkt werden. Das Auslenken relativ zur Umlaufbahn kann ein Schwenken des Schieborgans sein.

Insbesondere kann das Stückgut beim weg geben vom Hauptförderer durch das erste Schieborgan an einen Wegförderer übergeben werden.

Für den Wegförderer gelten sinngemäss dieselben Merkmale und Vorteil wie bereits weiter oben für den Hinförderer beschrieben.

Insbesondere ist in einem Bereich zwischen der Ausgangsposition und der Endposition des ersten Schieborgans eine Wegförderrichtung des Wegförderers im Wesentlichen rechtwinklig zur Förderrichtung des Hauptförderers angeordnet.

Mit Wegförderrichtung ist die Förderrichtung des Wegförderers bezeichnet. Das Stückgut wird durch den Wegförderer in Wegförderrichtung vom Hauptförderer weg gefördert.

Mit Bereich zwischen Ausgangsposition und Endposition des ersten Schieborgans ist ein Bereich des Hauptförderer und des Wegförderers gemeint, in welchem darauf angeordnetes Stückgut durch das erste Schieborgan bei der Schiebebewegung von der Ausgangsposition zur Endposition verschoben werden kann.

Beispielsweise ist die Wegförderrichtung sowohl im Wesentlichen senkrecht zur Förderrichtung des Hauptförderers als auch im Wesentlichen senkrecht zur Schieberichtung der Schiebevorrichtung.

Beispielsweise ist die Wegförderrichtung im Wesentlichen senkrecht zur Förderrichtung des Hauptförderers und im Wesentlichen parallel zur Schieberichtung der Schiebevorrichtung.

Optional ist in einem Bereich zwischen der Ausgangsposition und der Endposition des ersten Schieborgans die Wegförderrichtung des Wegförderers im Wesentlichen entgegengesetzt zur Förderrichtung des Hauptförderers angeordnet.

Als optionales Merkmal ist in einem Bereich zwischen der Ausgangsposition und der Endposition des ersten Schieborgans die Wegförderrichtung des Wegförderers im Wesentlichen parallel zur Förderrichtung des Hauptförderers angeordnet.

Beispielsweise dient ein einziger Förderer sowohl als Wegförderer als auch als Hinförderer. Alternativ sind Wegförderer und Hinförderer separat ausgebildet.

Die Erfindung umfasst auch ein Verfahren zur Übergabe von Stückgut durch eine Schiebevorrichtung an einen Hauptförderer und vom Hauptförderer weg, umfassend:
- Bewegen der Schiebevorrichtung in einer Schieberichtung der Schiebevorrichtung von einer Ausgangsposition in eine Endposition, und dadurch bewegen eines ersten Schieborgans der Schiebevorrichtung und eines zweitens Schieborgan der Schiebevorrichtung,
   wobei das erste Schieborgan von der Ausgangsposition zur Endposition vom zweiten Schieborgan fix beabstandet und vor dem zweiten Schieborgan angeordnet bewegt wird,
   wobei ein erstes Stückgut in Schieberichtung durch das erste Schieborgan aus einer Position in einem Förderbereich des Hauptförderers in eine Position ausserhalb des Förderbereichs verschoben wird und
   wobei ein zweites Stückgut in Schieberichtung durch das zweite Schieborgan, aus einer Bestückungszone ausserhalb des Förderbereich des Hauptförderers in eine Position innerhalb des Förderbereichs verschoben wird,
- Wiedererstellen der Ausgangsposition der Schiebevorrichtung.

Das Verfahren kann vom oben beschriebenen Übergabesystem ausgeführt werden. Die oben für das Übergabesystem beschriebenen optionalen Merkmale, Eigenschaften und Vorteile gelten entsprechend auch für das Verfahren. Umgekehrt gilt dasselbe.

Durch das Verfahren kann das oben beschriebene Ersetzen von Stückgut erreicht werden.

Optional kann im Verfahren das Bewegen der Schiebevorrichtung von der Ausgangsposition in die Endposition ausschliesslich in Schieberichtung in mindestens einer translatorischen Bewegung erfolgen. Insbesondere bremst die Schiebevorrichtung das sich in Schieberichtung bewegende zweite Stückgut im Förderbereich ab.

Indem nur translatorische Bewegungen in der Schiebebewegung erfolgen, kann eine entsprechende Vorrichtung einfach und robust ausgebildet sein.

Durch das Abbremsen des zweiten Stückguts im Förderbereich durch die Schiebevorrichtung kann das zweite Stückgut im Förderbereich zuverlässig und sicher positioniert werden. Eine Beschädigung und Fehlpositionierung des zweiten Stückguts kann vermieden werden. Das Abbremsen des zweiten Stückguts kann durch die Schiebevorrichtung erfolgen, wenn sich diese in der Endposition befindet.

Als optionales Merkmal bildet das erste Schieborgan einen Anschlag für das zweite Stückgut aus, um das zweite Stückgut im Förderbereich zu positionieren.

Das zweite Stückgut durch einen Anschlag am ersten Schieborgan im Förderbereich zu positionieren ist eine einfache, robuste und kostengünstige Art das zweite Stückgut im Förderbereich zu positionieren.

Das zweite Stückgut kann aber auch durch andere Teile als das erste Schieborgan der Schiebevorrichtung abgebremst werden. Das zweite Stückgut kann auch gar nicht von der Schiebevorrichtung abgebremst werden. Oder das zweite Stückgut kann von einem von der Schiebevorrichtung verschiedenen Element abgebremst werden.

Optional erfolgt nach dem Bewegen der Schiebevorrichtung von der Ausgangsposition in die Endposition mindestens eine Positionierbewegung des ersten Schieborgans entgegen der Schieberichtung, um das zweite Stückgut im Förderbereich zu positionieren.

Die Positionierbewegung des ersten Schieborgans erlaubt ein zuverlässiges und sicheres positionieren in einer Positionierposition. Beschädigung und Fehlpositionierung des zweiten Stückguts kann vermieden werden. Das erste Schieborgan kann durch die Positionierbewegung die Positionierposition einnehmen und erst danach das zweite Stückgut durch Interaktion mit dem Stückgut positionieren, beispielsweise durch einen Anschlag. Das erste Schieborgan kann bereits während der Positionierbewegung das zweite Stückgut durch Interaktion mit dem Stückgut bewegen, beispielsweise durch Schieben.

Während der Positionierbewegung kann das zweite Schieborgan fix beabstandet zum ersten Schieborgan ebenfalls entgegen der Schieberichtung bewegt werden. Insbesondere umfasst die Positionierbewegung mindestens eine translatorische Bewegung des ersten Schieborgans entgegen der Schiebrichtung der Schiebevorrichtung.

Auf eine Positionierbewegung kann auch verzichtet werden.

Als optionales Merkmal erfolgt beim Bewegen der Schiebevorrichtung von der Ausgangsposition in die Endposition das Verschieben des ersten Stückguts durch das erste Schieborgan mindestens teilweise gleichzeitig mit dem Verschieben des zweiten Stückguts durch das zweite Schieborgan.

Anders ausgedrückt überlappen sich das Verschieben des ersten Stückguts vom Hauptförderer weg und das Verschieben des zweiten Stückguts von der Bestückungszone in den Förderbereich zeitlich. Auf diese Weise kann die Verschiebevorrichtung effizient Stückgut im Förderbereich ersetzen. Das Übergabesystem kann die nötige Bewegung zum Verschieben des Stückguts zum Hauptförderer und vom Hauptförderer weg mindestens teilweise zeitgleich vornehmen. Dies erlaubt ein rasches und effizientes Betreiben der Übergabevorrichtung.

Alternativ kann das Verschieben des ersten Stückguts durch das erste Schieborgan zeitversetzt zum Verschieben des zweiten Stückguts durch das zweite Schieborgan erfolgen.

Optional ermittelt vor dem Bewegen der Schiebevorrichtung von der Ausgangsposition in die Endposition ein Grössenerfassungsmittel eine Grösseninformation von Stückgut im Förderbereich des Hauptförderers, und ein Steuermittel löst aufgrund dieser Grösseninformation das Bewegen der Schiebevorrichtung von der Ausgangsposition in die Endposition aus oder setzt es aus.

Auf diese Weise kann selektiv Stückgut einer bestimmten Grösse im Förderbereich ersetzt und/oder vom Hauptförderer weg gegeben werden. Insbesondere werden Stückgüter durch Stückgüter gleicher Grösse ersetzt.

Es kann auch auf eine Grössenerfassung im Förderbereich verzichtet werden.

Optional ermittelt vor dem Bewegen der Schiebevorrichtung von der Ausgangsposition in die Endposition ein Grössenerfassungsmittel eine Grösseninformation von Stückgut in der Bestückungszone ermittelt, und ein Steuermittel löst aufgrund dieser Grösseninformation das Verschieben der Schiebevorrichtung von der Ausgangsposition in die Endposition aus oder setzt es aus.

Auf diese Weise kann selektiv Stückgut einer bestimmten Grösse im Förderbereich ersetzt und/oder an den Hauptförderer übergeben werden. Insbesondere werden Stückgüter durch Stückgüter gleicher Grösse ersetzt. Es kann auch auf eine Grössenerfassung in der Bestückungszone verzichtet werden.

Beispielsweise umfasst das Übergabesystem Grössenerfassungsmittel für Stückgut in der Bestückungszone und im Förderbereich.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine erste Ausführungsform eines Übergabesystems mit einer ersten Schiebevorrichtung;
- Figur 2: eine zweite Ausführungsform eines Übergabesystems mit einer zweiten Schiebevorrichtung nach Beginn einer Schiebebewegung;
- Figur 3: das Übergabesystems aus Figur 2 in Endposition;
- Figur 4: das Übergabesystems aus Figur 2 beim Wiedererstellen der Ausgangsposition;
- Figur 5: das Übergabesystems aus Figur 2 in Ausgangsposition;
- Figur 6: das Übergabesystems aus Figur 2 in Kombination mit einer Bearbeitungszone;
- Figur 7: eine räumliche Darstellung einiger Elemente aus Figur 2;
- Figur 8: eine Figur analog zu Figur 7 aber mit alternativer Versorgung der Bestückungszone.

Grundsätzlich sind in den Figuren gleiche Teile mit gleichen Bezugszeichen versehen. Mit den Bezeichnungen links, rechts, unten und oben wird auf die Zeichnungsebene der Figuren Bezug genommen.

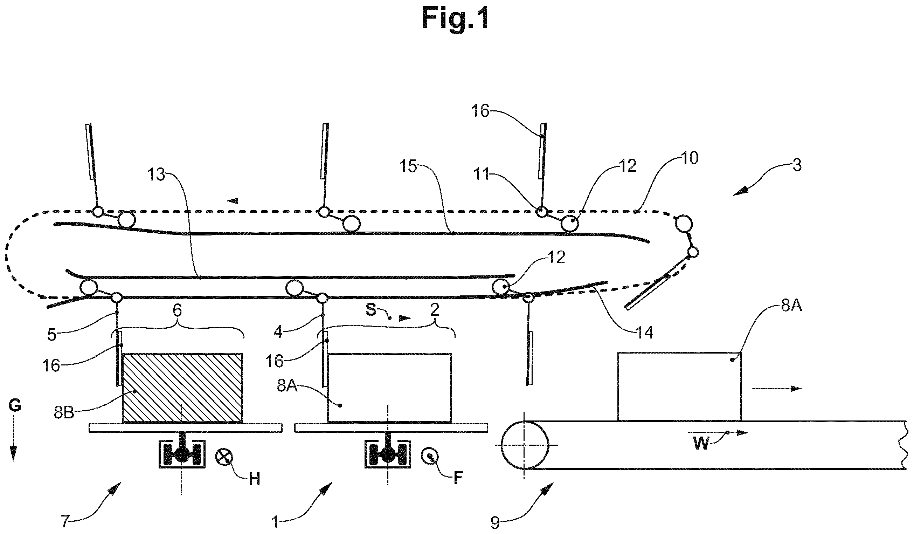

Figur 1 zeigt eine erste Ausführungsform eines Übergabesystems mit einer ersten Schiebevorrichtung 3. Mit G ist die Gravitationsrichtung bezeichnet, welche in Figur 1 nach unten, also an den unteren Rand der Figur 1 zeigt. Der Hauptförderer 1 ist ein Plattenkettenförderer, dessen Förderrichtung F senkrecht zur Zeichnungsebene gegen den Betrachter herausführt. Ein Plattenkettenförderer umfasst an einer Förderkette befestigte Platten, auf welchen Fördergut befördert werden kann. Auf dem Hauptförderer 1 ist ein Förderbereich 2 ausgebildet. Der Förderbereich 2 ist gegen unten durch eine Auflagefläche des Hauptförderers 1 begrenzt und geht seitlich bis fast an die seitlichen Enden der Auflagefläche des Hauptförderers 1. Stückgut 8A, 8B, welches im Förderbereich 2 des Hauptförderers 1 angeordnet ist, hält durch Haftreibung am Hauptförderer 1. Die Haftreibung des Stückguts 8A, 8B am Hauptförderer 1 entsteht durch eine Anpresskraft aufgrund einer Gewichtskraft des Stückguts 8A, 8B in Richtung der Gravitationsrichtung G.

Links neben dem Hauptförderer 1 ist ein Hinförderer 7 angeordnet, welcher ebenfalls als Plattenkettenförderer ausgebildet ist. Die Förderrichtung des Hinförderers 7 wird als Hinförderrichtung H bezeichnet. In der Ausführungsform in Figur 1 ist die Hinförderrichtung H der Förderrichtung F des Hauptförderers 1 entgegengesetzt angeordnet. Somit zeigt die Hinförderrichtung H des Hinförderers 7 senkrecht aus der Zeichnungsebene heraus vom Betrachter der Figur 1 weg. Hinförderer 7 und Hauptförderer 1 sind in der Ansicht von Figur 1 analog und gleich gross ausgebildet, weisen mit anderen Worten denselben Querschnitt quer zu deren Förderrichtungen F, H auf. Der Hinförderer 7 weist analog und gleich gross einen Hinförderbereich auf, welcher sich in Figur 1 mit der Bestückungszone 6 deckt. Der Hinförderer 7 versorgt die Bestückungszone 6 mit vollem Stückgut 8B.

Rechts neben dem Hauptförderer 1 ist ein Wegförderer 9 angeordnet, welcher auch als Bandförderer ausgebildet ist und dessen Förderrichtung, also die Wegförderrichtung W nach rechts verläuft. Somit ist die Wegförderrichtung W senkrecht zur Förderrichtung F des Hauptförderers 1 angeordnet, und dadurch auch senkrecht zur Hinförderrichtung H. Alle Auflageflächen der drei Förderer (Hauptförderer 1, Hinförderer 7 und Wegförderer 9) liegen auf gleicher Höhe, sodass Stückgut 8A, 8B durch eine seitliche Kraft jeweils von einem Förderer auf einen benachbarten Förderer geschoben werden kann.

Die Schiebevorrichtung 3 ist über Stückgut 8A, 8B angeordnet, welches auf dem Hauptförderer 1 und dem Hinförderer 7 liegt, und reicht auf gleicher Höhe auch etwa eine Breite eines Stückguts über den Wegförderer 9 hinaus. Die Schiebevorrichtung 3 umfasst ein erstes Schieborgan 4, ein zweites Schieborgan 5 und weitere Schieborgane, welche alle an einer Ketten 10 befestigt sind. Die Ketten 10 fördert alle Schieborgane um eine geschlossene Umlaufbahn. Diese geschlossene Umlaufbahn der Ketten 10 umfasst zwei gerade verlaufende, parallel übereinander angeordnete Abschnitte und diese Abschnitte verbindende Umlenkbereiche. Der untere gerade Abschnitt verläuft parallel zu einer Schieberichtung S der Schiebevorrichtung und fördert alle Schieborgane in die Schieberichtung S, also von links nach rechts in Figur 1. Über den rechten Umlenkbereich der Umlaufbahn werden alle Schieborgane nach oben gefördert und dann nach links entlang des oberen parallelen Abschnittes der Umlaufbahn. Danach werden alle Schieborgane über den linken Umlenkbereich der Umlaufbahn nach unten zum Beginn des unteren parallelen Abschnittes der Umlaufbahn gefördert.

Alle Schieborgane der Schiebevorrichtung 3 der ersten Ausführungsform sind baugleich ausgebildet und umfassen ein Schieborgangelenk 11, ein Steuerorgan 12 und eine Schiebeplatte 16. Das Schieborgangelenk 11, das Steuerorgan 12 und die Schiebeplatte 16 sind am Schieborgan jeweils ortsfest befestigt und bleiben relativ zueinander immer gleich angeordnet. Die Schiebeplatte 16 bildet einen Anschlag für Stückgut 8A, 8B am Schieborgan aus. Alle Schieborgane sind über die Schieborgangelenke 11 gelenkig mit der Ketten 10 verbunden. Die Schiebevorrichtung 3 umfasst zudem drei ortsfest installierte Kulissen: eine untere Schiebekulisse 14, eine obere Schiebekulisse 13 und eine Rückführkulisse 15. Bei einer Bewegung der Schieborgane um unteren parallelen Abschnitt der Umlaufbahn in Schieberichtung S können die Steuerorgane 12 der Schieborgane auf der unteren Schiebekulisse 14 von oben aufliegen und von unten auf die obere Schiebekulisse 13 drücken.

Die Steuerorgane 12 sind im Bereich wo die Schieborgane in Schieberichtung S bewegt werden an einem oberen linken Ende der Schieborgane angeordnet. In diesem Bereich ist rechts unterhalb des Steuerorgans 12 das Schieborgangelenk 11 angeordnet, und unterhalb des Schieborgangelenks 11 und senkrecht nach unten erstreckend der Rest des Schieborgans, an welchem die Schiebeplatte 16 befestigt ist. Dieser in diesem Bereich senkrecht nach unten erstreckende Teil des Schiebeorgans kann durch die Schiebeplatte 16 mit Stückgut 8A, 8B in Kontakt treten und durch ausüben einer Kraft in Schieberichtung S Stückgut 8A, 8B in Schieberichtung S schieben. Auf diese Weise kann volles Stückgut 8B vom Hinförderer 7 an den Hauptförderer 1 übergeben werden und leeres Stückgut 8A vom Hauptförderer 1 weg gegeben werden, in diesem Fall an den Wegförderer 9 übergeben werden.

Durch die gelenkige Befestigung an der Ketten 10 und durch die untere Schiebekulisse 14 sowie die obere Schiebekulisse 13 in Position gehalten ist das erste Schieborgan 4 in Schieberichtung S zwischen der Ausgangsposition und der Endposition fix beabstandet zum und vor dem zweiten Schieborgan 5 angeordnet. Auf diese Weise bewirkt jede Bewegung des ersten Schieborgans 4 auf dem Weg von der Ausgangsposition zur Endposition dieselbe Bewegung des zweiten Schieborgans 5.

In Figur 1 befindet sich die Verschiebevorrichtung 3 zwischen einer Ausgangsposition und einer Endposition. Die Verschiebevorrichtung 3 ist gerade zu Beginn eines gleichzeitigen Verschiebens eines ersten, leeren Stückguts 8A vom Hauptförderer 1 weg an den Wegförderer 9 und eines Verschiebens eines zweiten, vollen Stückguts 8B von der Bestückungszone 6 in den Förderbereich 2 des Hauptförderers 1 abgebildet. Die Steuerorgane 12 des ersten Schieborgans 4 und des zweiten Schieborgans 5 sind über die ganze Schiebebewegung der Schiebevorrichtung 1 von der Anfangsposition zur Endposition durch die untere Schiebekulisse 14 und die obere Schiebekulisse 13 in seiner Bewegung begrenzt. Die untere Schiebekulisse 14 richtet die Schieborgane 4, 5 aus und die obere Schiebekulisse 13 nimmt eine Kraft und einen Impuls auf, welche durch das Schieben der Stückgüter 8A, 8B in Schieberichtung S entstehen. Beim Wiedererstellen der Ausgangsposition der Schiebevorrichtung 3 richtet die Rückführkulisse 15 durch die Steuerorgane 12 die Schieborgane aus.

In Figur 1 fördert der Hauptförderer 1 leeres Stückgut 8A bis zur Schiebevorrichtung 3, deren Schieberichtung S rechtwinklig zur Förderrichtung F des Hauptförderers 1 angeordnet ist. Ist das leere Stückgut 8A an passender Stelle unterhalb der Schiebevorrichtung 3 angeordnet, beginnt die Schiebevorrichtung 3 die Schiebebewegung von der Ausgangsposition in die Endposition. In Figur 1 ist der Zeitpunkt dargestellt, in welcher das erste Schieborgan 4 durch dessen Schiebeplatte 16 mit dem leeren, ersten Stückgut 8A im Förderbereich 2 des Hauptförderers 1 in Kontakt tritt und das zweite Schieborgan 5 durch dessen Schiebeplatte 16 mit dem vollen, zweiten Stückgut 8B (schraffiert dargestellt) in der Bestückungszone 6 im Förderbereich 2 des Hinförderers 7 in Kontakt tritt. Sowohl das leere, erste Stückgut 8A als auch das volle, zweite Stückgut 8B befinden sich noch in Haftreibung mit dem Hauptförderer 1 beziehungsweise dem Hinförderer 7. Danach beginnt das Schieben des ersten Stückguts 8A vom Hauptförderer 1 zum Wegförderer 9 und das Schieben des zweiten Stückguts 8B von der Bestückungszone 6 in den Förderbereich 2 des Hauptförderers 1. Wenn die Verschiebevorrichtung 3 seine Endposition erreicht hat, ist somit das leere, erste Stückgut 8A im Förderbereich 2 des Hauptförderers 1 durch das volle, zweite Stückgut 8B ersetzt worden.

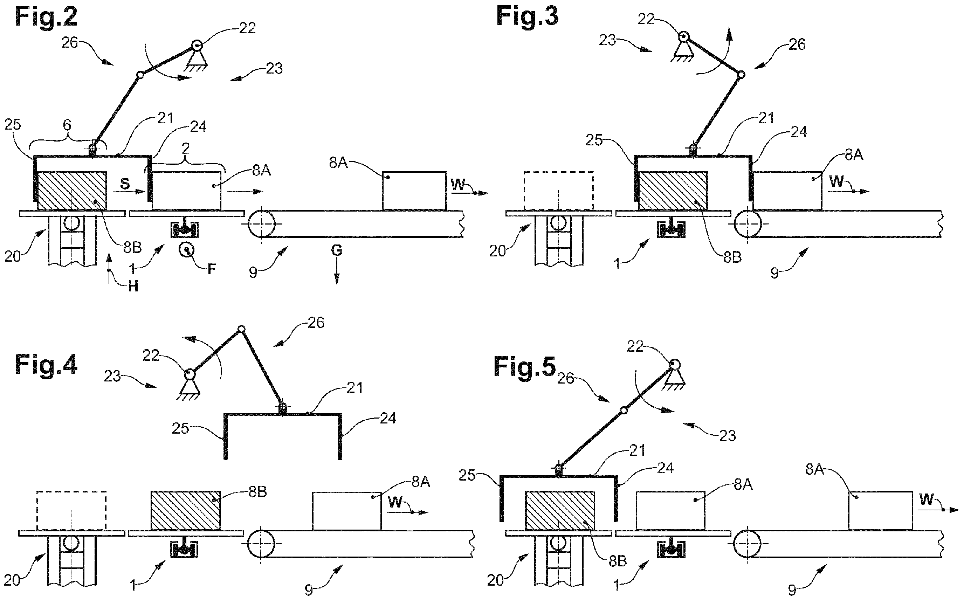

In Figur 2 ist eine zweite Ausführungsform eines Übergabesystems mit einer zweiten Schiebevorrichtung 23 dargestellt, wie in Figur 1 ebenfalls nach Beginn einer Schiebebewegung. Figur 2 stellt wie Figur 1 nur einen Ausschnitt des gesamten Übergabesystems dar. Die zweite Ausführungsform des Übergabesystems in Figur 2 unterscheidet sich von der ersten Ausführungsform des Übergabesystems in Figur 1 durch eine anders ausgebildete Schiebevorrichtung 23 und durch eine andere Versorgung der Bestückungszone 6.

Die Bestückungszone 6 wird in Figur 2 durch einen Aufzug 20 anstatt durch einen Hinförderer 7 wie in Figur 1 versorgt. Der Aufzug 20 fährt dabei volles Stückgut 8B von unten nach oben in die Bestückungszone 6. Ist das volle Stückgut 8B vom zweiten Schieborgan 25 durch die Schiebebewegung an den Hauptförderer 1 übergeben worden, fährt der Aufzug 20 wieder nach unten, um ein weiteres volles Stückgut 8B zu holen und dieses durch erneutes nach oben fahren in die Bestückungszone 6 zu bringen.

Die Schiebevorrichtung 23 ist in der zweiten Ausführungsform anders ausgebildet als in der ersten Ausführungsform, aber die Schieborgane 4, 5, 24, 25 werden in beiden Ausführungsformen grundsätzlich entlang einer geschlossenen Umlaufbahn mit ähnlicher Form bewegt. Die Umlaufbahn der Schiebevorrichtung 23 in der zweiten Ausführungsform weist somit ebenfalls zwei gerade verlaufende, parallel übereinander angeordnete Abschnitte und diese Abschnitte verbindende Umlenkbereiche auf.

Auch hier verläuft der untere gerade Abschnitt parallel zur Schieberichtung S der Schiebevorrichtung 24 und fördert die Schieborgane 24, 25 in Schieberichtung S von der Ausgangsposition in die Endposition, also von links nach rechts in Figur 2. Über den rechten Umlenkbereich der Umlaufbahn werden zwei Schieborgane 24, 25 nach oben gefordert und dann nach links entlang des oberen parallelen Abschnittes der Umlaufbahn. Danach werden die beiden Schieborgane 24, 25 über den linken Umlenkbereich der Umlaufbahn nach unten zum Beginn des unteren parallelen Abschnittes der Umlaufbahn gefördert. Die Umlaufbahn ist für die zweite Ausführungsform aus Platzgründen nicht eingezeichnet. Die Umlaufbahn der zweiten Ausführungsform wird aber erkennbar durch die Figuren 2 bis 5. Darin wird jeweils immer dieselbe Ansicht der zweiten Ausführungsform des Übergabesystems dargestellt, wobei aber die Schiebevorrichtung 23 in zeitlicher Abfolge in verschiedenen Stellungen entlang der Umlaufbahn gezeigt wird.

Die Schiebevorrichtung 23 umfasst zwei Schieborgane, nämlich das erste Schieborgan 24 und das zweite Schieborgan 25. Diese beiden Schieborgane 24, 25 sind fix zueinander an einem Doppelschieber 21 angeordnet, das heisst relativ zueinander unbeweglich, und werden entlang der Umlaufbahn bewegt. Das erste Schieborgan 24 ist dabei rechts vom zweiten Schieborgan 25 am Doppelschieber 21 angeordnet, also in Schieberichtung S vor dem Schieborgan 25. Im Gegensatz zur ersten Ausführungsform bleiben das erste Schieborgan 24 und das zweite Schieborgan 25 auf ihrem Weg über die ganze Umlaufbahn der Schiebevorrichtung 23 fix voneinander beabstandet und in die gleiche Richtung weisend, nämlich mit deren Längsachsen parallel zur Gravitationsrichtung G angeordnet. Auf diese Weise bewirkt jede Bewegung des ersten Schieborgans 24 auf einem Weg entlang der ganzen Umlaufbahn dieselbe Bewegung des zweiten Schieborgans 25.

In der ersten Ausführungsform in Figur 1 hingegen werden die Schieborgane 4, 5 bei der Wiedererstellung der Ausgangsposition nach der Endposition relativ zur Ketten 10 geschwenkt, ändern also zeitweise ihre Ausrichtung und den relativen Abstand zueinander.

Jede Bewegung des ersten Schieborgans 4 bewirkt aber dieselbe Bewegung des zweiten Schieborgans 5 mindestens auf einem Weg von der Ausgangsposition zur Endposition.

Die Bewegung des Doppelschiebers 21 entlang der Umlaufbahn erfolgt durch einen Kurbelstangenantrieb 26, welcher den Doppelschieber 21 mit einem ortsfesten Drehpunkt 22 verbindet. Der Kurbelstangenantrieb 26 ist gelenkig mit dem Doppelschieber 21 verbunden, sodass das erste Schieborgan 24 und das zweite Schieborgan 25 jeweils an jeder Position der Umlaufbahn gleich ausgerichtet sind, nämlich mit ihrer Längsachse parallel zur Gravitationsrichtung G.

Figur 3 zeigt das Übergabesystem aus Figur 2 in Endposition. Die Schiebebewegung der Schiebevorrichtung 23 ist also in Figur 3 beendet. Das volle Stückgut 8B (schraffiert dargestellt) ist in den Förderbereich 2 geschoben und dem Hauptförderer 1 übergeben worden und ist somit bereit für ein Weiterfördern durch den Hauptförderer 1. Und das leere Stückgut 8A, welches bis zur Schiebevorrichtung 23 mit dem Hauptförderer gefördert worden ist, ist nun an den Wegförderer 9 übergeben und befindet sich also ausserhalb des Förderbereichs 2 des Hauptförderers 1. Das erste Schieborgan 24 ist in Schieberichtung vor dem Förderbereich 2 angeordnet, und das zweite Schieborgan 25 ist in Schieberichtung S zwischen dem Förderbereich 2 und der Bestückungszone 6 angeordnet.

In Figur 4 ist wieder dasselbe Übergabesystems wie in Figur 2 dargestellt, aber diesmal beim Wiedererstellen der Ausgangsposition. Hierzu wird der Doppelschieber 21 von dem Kurbelstangenantrieb 26 nach oben gehoben und nach links bewegt. Der Hauptförderer 1 fördert derweilen das zuvor in Figur 3 von der Schiebevorrichtung 23 übernommene volle Stückgut 8B weiter in Förderrichtung F des Hauptförderers 1, und das von der Schiebevorrichtung 23 zuvor an den Wegförderer 9 übergebene leere Stückgut 8A wird in die Wegförderrichtung W des Wegförderers 9 gefördert.

Figur 5 wiederum zeigt ebenfalls dasselbe Übergabesystems wie Figur 2, und zwar in Ausgangsposition. Mittlerweile ist im Förderbereich 2 des Hauptförderers 1 leeres Stückgut 8A unterhalb der Schiebevorrichtung 23 angeordnet. Und die Bestückungszone 6 ist durch den Aufzug 20 mit vollem Stückgut 8B versorgt. Das erste Schieborgan 24 ist in Schieberichtung S zwischen dem Förderbereich 2 und der Bestückungszone 6, und das zweite Schieborgan 25 in Schieberichtung S hinter der Bestückungszone 6 angeordnet. Von dieser Stellung in Ausgangsposition aus beginnt die Schiebebewegung der Schiebevorrichtung 23 und geht in die in Figur 2 dargestellte Stellung über, in welcher die Stückgüter 8A, 8B jeweils mit dem ersten Schieborgan 24 und dem zweiten Schieborgan 25 in Kontakt treten und danach nach rechts in Schieberichtung S geschoben werden.

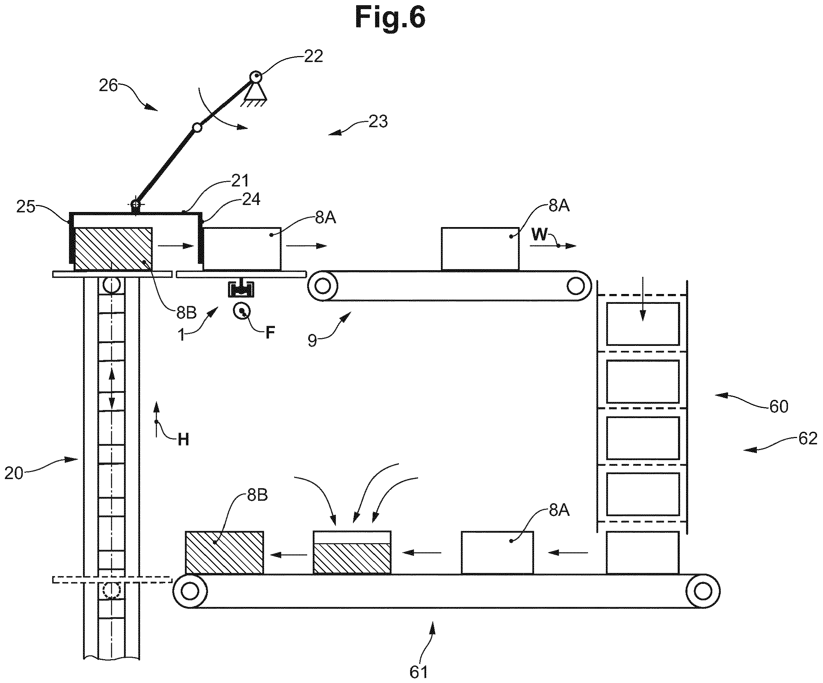

Figur 6 zeigt das Übergabesystems aus Figur 2 in Kombination mit einer Bearbeitungszone. Die Übergabevorrichtung 23 in Figur 6 befindet sich dabei in derselben Stellung in der Umlaufbahn wie in Figur 2. Einziger Unterschied von Figur 6 zu Figur 2 ist, dass Figur 6 mehr als den in Figur 2 gezeigten Ausschnitt darstellt.

In Figur 6 ist ein Beispiel eines Übergabesystems dargestellt, dessen Hauptförderer 1 Stückgüter 8A, 8B zu einer Bearbeitungszonen in Form einer Befüllstation 62 fördert und auch wieder davon hinweg. Die Befüllstation 62 umfasst ein Umlaufregal 60 und einen Befüllförderer 61. Das Umlaufregal 60 wird auch vertikales Umlaufregal oder Paternosterregal genannt und übernimmt leeres Stückgut 8A vom Wegförderer 9. Das Umlaufregal 60 fördert das leere Stückgut 8A dann nach unten und übergibt es dem Befüllförderer 61, welcher als Bandförderer ausgebildet ist. Auf dem Befüllförderer 61 werden die leeren Stückgüter 8A von rechts nach links zum Aufzug 20 gefördert. Dabei werden die leeren Stückgüter 8A auf dem Befüllförderer 61 befüllt (in Figur 6 durch Pfeile angedeutet) und erreichen den Aufzug 20 als volle Stückgüter 8B. Mit dem Aufzug 20 werden die vollen Stückgüter 8B wie bereits beschrieben in die Bestückungszone 6 gefördert.

Derselbe Hauptförderer 1 fördert somit leere Stückgüter 8A (leere Kisten) zu der Befüllstation 62, wo diese Stückgüter 8A befüllt werden und als volle Stückgüter 8B (volle Kisten) durch die Schiebevorrichtung 23 wieder an den Hauptförderer 1 übergeben werden, indem die vollen Stückgüter 8B die leeren Stückgüter 8A an derselben Stelle im Förderbereich 2 ersetzen. Die vollen Stückgüter 8B aus der Befüllstation 62 werden dann von demselben Hauptförderer 1 weitergefördert, welcher bereits die leeren Stückgüter 8A zur Befüllstation 62 gefördert hat.

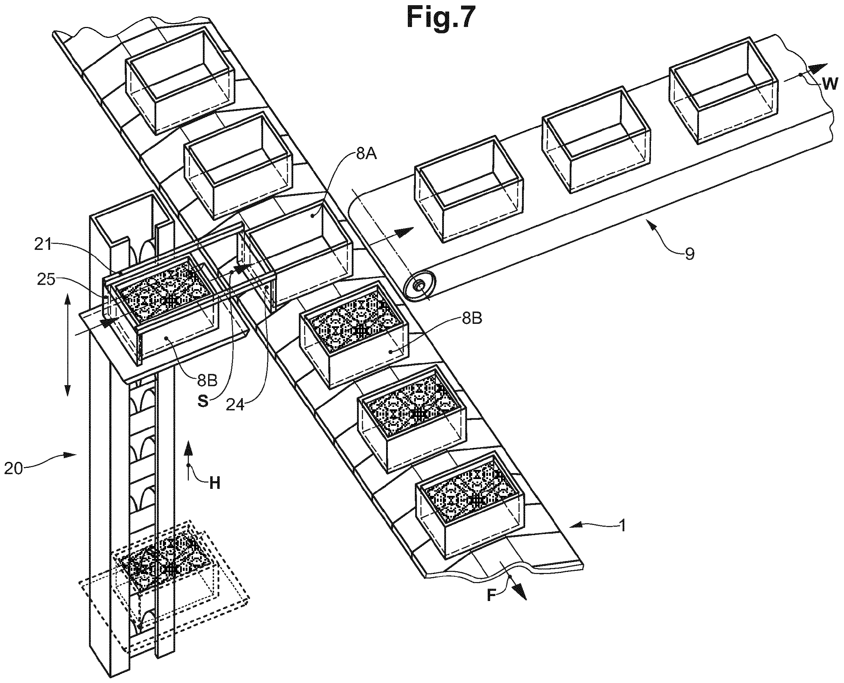

Figur 7 ist eine räumliche Darstellung einiger Elemente aus Figur 2. Gut ersichtlich ist die gleichbleibende Auslastung des Hauptförderers 1, weil der Doppelschieber 21 des Übernahmesystems mit seinem ersten Schieborgan 24 leeres Stückgut 8A vom Hauptförderer 1 an den Wegförderer 9 übergibt und mit vollem Stückgut 8B ersetzt. Dieses volle Stückgut 8B wird durch das zweite Schieborgan 25 in Schieberichtung S an die ehemals vom leeren Stückgut 8A besetzte Stelle im Förderbereich 2 des Hauptförderers 1 geschoben.

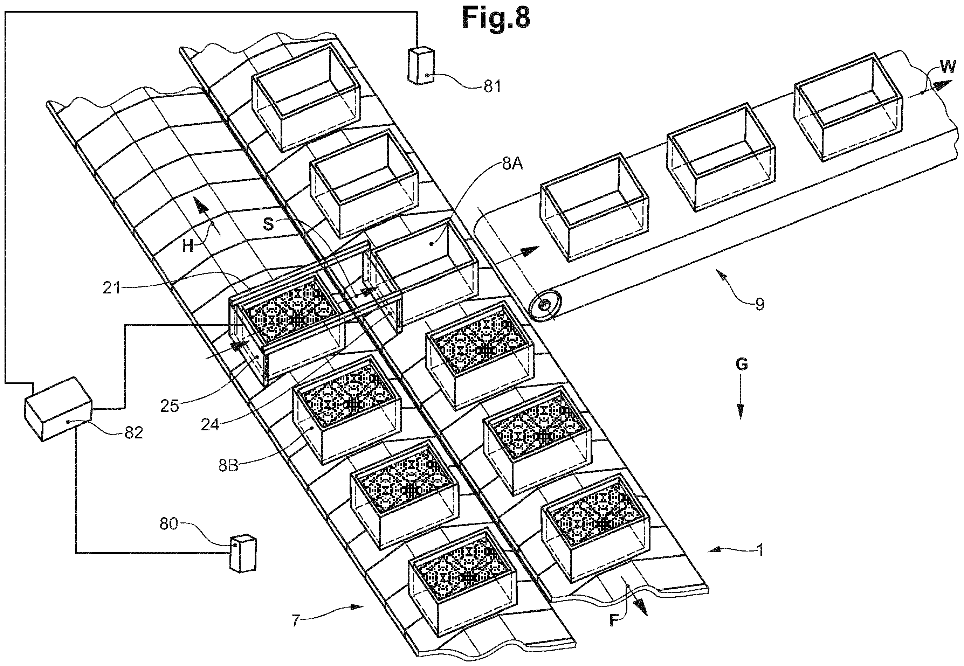

Figur 8 eine Figur analog zu Figur 7 aber mit alternativer Versorgung der Bestückungszone 6. Analog zur Figur 1 mit der ersten Ausführungsform des Übergabesystems wird in Figur 8 die zweite Ausführungsform des Übergabesystems mit einer durch einen Hinförderer 7 versorgten Bestückungszone 6 dargestellt. Der Hinförderer 7 ist analog zu Figur 1 ausgebildet und angeordnet. Also ist der Hinförderer 7 parallel links neben dem Hauptförderer 1 angeordnet und als Plattenkettenförderer ausgebildet. Die Hinförderrichtung H des Hinförderers 7 ist der Förderrichtung F des Hauptförderers 1 entgegengesetzt. Hinförderer 7 und Hauptförderer 1 sind analog und gleich gross ausgebildet, weisen also denselben Querschnitt quer zu deren Förderrichtungen F, H auf. Der Hinförderer 7 weist analog und gleich gross einen Hinförderbereich auf und versorgt die Bestückungszone 6 mit vollem Stückgut 8B.

Zudem umfasst das Übergabesystem in Figur 8 ein Grössenerfassungsmittel 81 für Stückgüter 8A im Förderbereich 2 des Hauptförderers 1. Das Grössenerfassungsmittel 81 ermittelt eine Grösseninformation des leeren Stückguts 8A, bevor dieses durch den Hauptförderer 1 zum Doppelschieber 21 gefördert wird. Das Grössenerfassungsmittel 81 umfasst in diesem Beispiel eine Kamera, welche ein Bild des leeren Stückguts 8A macht. Das Grössenerfassungsmittel 81 ermittelt durch Auswertung dieses Bildes die Grösseninformation. Die Grösseninformation ist eine Abmessung des leeren Stückguts 8A aus Sicht der Kamera. Also die Dimension des leeren Stückguts 8A auf dem Bild der Kamera, welche vom Grössenerfassungsmittel 81 umfasst wird.

Das Übergabesystem in Figur 8 umfasst darüber hinaus ein Grössenerfassungsmittel 80 für Stückgüter 8B in der Bestückungszone 6. Das Grössenerfassungsmittel 80 ermittelt eine Grösseninformation des vollen Stückguts 8B auf dem Hinförderer 7, bevor dieses volle Stückgut 8B durch den Hinförderer 7 in der Bestückungszone 6 bereitgestellt wird. Das Grössenerfassungsmittel 80 umfasst in diesem Beispiel eine Kamera, welche ein Bild des vollen Stückguts 8B auf dem Hinförderer 7 macht. Das Grössenerfassungsmittel 80 ermittelt durch Auswertung dieses Bildes die Grösseninformation. Die Grösseninformation ist eine Abmessung des vollen Stückguts 8B aus Sicht der Kamera. Also die Dimension des vollen Stückguts 8B auf dem Bild der Kamera, welche vom Grössenerfassungsmittel 81 umfasst wird.

Die Grösseninformation der beiden Grössenerfassungsmittel 80, 81 wird einem Steuermittel 82 zur Verfügung gestellt. Das Steuermittel 82 verfügt somit über Informationen zur Grösse der Stückgüter 8A, 8B, welche sich zu einem bestimmten Zeitpunkt im Förderbereich 2 und/oder in der Bestückungszone 6 befinden. Das Steuermittel 82 löst beispielsweise dann eine Bewegung des Doppelschiebers 21 von der Ausgangsposition in die Endposition aus, wenn die Grösse des im Förderbereich 2 und in Schieberichtung S vor dem ersten Schieborgan 24 liegenden leeren Stückguts 8A im Wesentlichen der Grösse des vollen Stückguts 8B in der Bestückungszone 6 entspricht. Mit im Wesentlichen entsprechender Grösse ist dabei eine Abweichung der räumlichen Ausdehnung in jeder Richtung von maximal 10% gemeint.

## Patentansprüche

1. Übergabesystem für Stückgüter (8A, 8B), umfassend eine Schiebevorrichtung (3, 23) und einen Hauptförderer (1) mit einem Förderbereich (2), wobei die Schiebevorrichtung (3, 23) mindestens ein erstes Schieborgan (4, 24) und ein zweites Schieborgan (5, 25) aufweist, und das Übergabesystem in einer Schieberichtung (S) hinter dem Förderbereich (2) eine Bestückungszone (6) aufweist,
in einer Ausgangsposition der Schiebevorrichtung (3, 23) das erste Schieborgan (4, 24) in Schieberichtung (S) zwischen dem Förderbereich (2) und der Bestückungszone (6), und das zweite Schieborgan (5, 25) in Schieberichtung hinter der Bestückungszone (6) angeordnet ist,
in einer Endposition der Schiebevorrichtung (3, 23), welche in Schieberichtung (S) vor der Ausgangsposition angeordnet ist, das erste Schieborgan (4, 24) in Schieberichtung (S) vor dem Förderbereich (2) und das zweite Schieborgan (5, 25) in Schieberichtung (S) zwischen dem Förderbereich (2) und der Bestückungszone (6) angeordnet sind, sodass bei einer Bewegung der Schiebevorrichtung (3, 23) von der Ausgangsposition zur Endposition Stückgut (8A, 8B) von der Bestückungszone (6) an den Förderbereich (2) übergeben und Stückgut (8A, 8B) vom Förderbereich (2) weg gegeben werden kann,
in der Schiebevorrichtung (3, 23) das erste Schieborgan (4, 24) in Schieberichtung (S) zwischen der Ausgangsposition und der Endposition fix beabstandet zum und vor dem zweiten Schieborgan (5, 25) angeordnet ist, sodass jede Bewegung des ersten Schieborgans (4, 24) auf einem Weg von der Ausgangsposition zur Endposition dieselbe Bewegung des zweiten Schieborgans (5, 25) bewirkt.

2. Übergabesystem gemäss Anspruch 1, **dadurch gekennzeichnet, dass** die Schieberichtung (S) der Schiebevorrichtung (3, 23) schräg zu einer Förderrichtung (F) des Hauptförderers (1) angeordnet ist.

3. Übergabesystem gemäss Anspruch 2, **dadurch gekennzeichnet, dass** die Schieberichtung (S) der Schiebevorrichtung (3, 23) rechtwinklig zur Förderrichtung (F) des Hauptförderers (1) angeordnet ist.

4. Übergabesystem gemäss einem der Ansprüche 1 bis 3, **dadurch gekennzeichnet, dass** die Bestückungszone (6) in einem Förderbereich eines Hinförderers (7) angeordnet ist.

5. Übergabesystem gemäss Anspruch 4, **dadurch gekennzeichnet, dass** in einem Bereich zwischen der Ausgangsposition und der Endposition des zweiten Schieborgans (5, 25) eine Hinförderrichtung (H) des Hinförderers (7) im Wesentlichen rechtwinklig zur Förderrichtung (F) des Hauptförderers (1) angeordnet ist.

6. Übergabesystem gemäss Anspruch 4, **dadurch gekennzeichnet, dass** in einem Bereich zwischen der Ausgangsposition und der Endposition des zweiten Schieborgans (5, 25) eine Hinförderrichtung (H) des Hinförderers (7) im Wesentlichen entgegengesetzt zur Förderrichtung (F) des Hauptförderers (1) angeordnet ist.

7. Übergabesystem gemäss einem der Ansprüche 1 bis 6, **dadurch gekennzeichnet, dass** die Schiebevorrichtung (3, 23) eine geschlossene Umlaufbahn umfasst, entlang welcher die mindestens zwei Schieborgane (4, 5, 24, 25) bewegt werden, und ein Teil der Umlaufbahn, welcher zwischen der Ausgangsposition und der Endposition liegt, frei von Schnittpunkten mit der restlichen Umlaufbahn ist.

8. Übergabesystem gemäss einem der Ansprüche 1 bis 7, **dadurch gekennzeichnet, dass** Übergabesystem einen kontinuierlichen Antrieb für die Schiebevorrichtung (3, 23) umfasst, und insbesondere einen sequentiellen Antrieb für die Schiebevorrichtung (3, 23) umfasst.

9. Übergabesystem gemäss einem der Ansprüche 1 bis 8, **dadurch gekennzeichnet, dass** Übergabesystem ein Steuermittel für die Schiebevorrichtung (3, 23) und ein Grössenerfassungsmittel (81) für Stückgüter (8A, 8B) im Förderbereich (2) des Hauptförderers (1) umfasst, wobei das Steuermittel eine Grösseninformation des Grössenerfassungsmittels (81) zur Verfügung gestellt bekommt und unter Berücksichtigung dieser Grösseninformation eine Bewegung der Schiebevorrichtung (3, 23) wahlweise auszulösen imstande ist.

10. Übergabesystem gemäss einem der Ansprüche 1 bis 9, **dadurch gekennzeichnet, dass** Übergabesystem ein Steuermittel für die Schiebevorrichtung (3, 23) und ein Grössenerfassungsmittel (80) für Stückgüter (8A, 8B) der Bestückungszone (6) umfasst, wobei das Steuermittel eine Grösseninformation des Grössenerfassungsmittels (80) zur Verfügung gestellt bekommt und unter Berücksichtigung dieser Grösseninformation eine Bewegung der Schiebevorrichtung (3, 23) wahlweise auszulösen imstande ist.

11. Verfahren zur Übergabe von Stückgut (8A, 8B) durch eine Schiebevorrichtung (3, 23) an einen Hauptförderer (1) und vom Hauptförderer (1) weg, umfassend:
- Bewegen der Schiebevorrichtung (3, 23) in einer Schieberichtung (S) der Schiebevorrichtung (3, 23) von einer Ausgangsposition in eine Endposition, und dadurch bewegen eines ersten Schieborgans (4, 24) der Schiebevorrichtung (3, 23) und eines zweiten Schieborgans (5, 25) der Schiebevorrichtung (3, 23),
wobei das erste Schieborgan (4, 24) von der Ausgangsposition zur Endposition vom zweiten Schieborgan (5, 25) fix beabstandet und vor dem zweiten Schieborgan (5, 25) angeordnet bewegt wird,
wobei ein erstes Stückgut (8A, 8B) in Schieberichtung (S) durch das erste Schieborgan (4, 24) aus einer Position in einem Förderbereich (2) des Hauptförderers (1) in eine Position ausserhalb des Förderbereichs (2) verschoben wird und
wobei ein zweites Stückgut (8A, 8B) in Schieberichtung (S) durch das zweite Schieborgan (5, 25), aus einer Bestückungszone (6) ausserhalb des Förderbereichs (2) des Hauptförderers (1) in eine Position innerhalb des Förderbereichs (2) verschoben wird,
- Wiedererstellen der Ausgangsposition der Schiebevorrichtung (3, 23).

12. Verfahren gemäss Anspruch 11, **dadurch gekennzeichnet, dass** das Bewegen der Schiebevorrichtung (3, 23) von der Ausgangsposition in die Endposition ausschliesslich in Schieberichtung (S) in mindestens einer translatorischen Bewegung erfolgt und insbesondere die Schiebevorrichtung (3, 23) das sich in Schieberichtung (S) bewegende zweite Stückgut (8A, 8B) im Förderbereich (2) abbremst.

13. Verfahren gemäss Anspruch 11 oder 12, **dadurch gekennzeichnet, dass** das erste Schieborgan (4, 24) einen Anschlag (16) für das zweite Stückgut (8A, 8B) ausbildet, um das zweite Stückgut (8A, 8B) im Förderbereich (2) zu positionieren.

14. Verfahren gemäss einem der Ansprüche 11 bis 13, **dadurch gekennzeichnet, dass** nach dem Bewegen der Schiebevorrichtung (3, 23) von der Ausgangsposition in die Endposition mindestens eine Positionierbewegung des ersten Schieborgans (4, 24) entgegen der Schieberichtung erfolgt, um das zweite Stückgut (8A, 8B) im Förderbereich (2) zu positionieren.

15. Verfahren gemäss einem der Ansprüche 11 bis 14, **dadurch gekennzeichnet, dass** beim Bewegen der Schiebevorrichtung (3, 23) von der Ausgangsposition in die Endposition das Verschieben des ersten Stückguts (8A, 8B) durch das erste Schieborgan (4, 24) mindestens teilweise gleichzeitig mit dem Verschieben des zweiten Stückguts (8A, 8B) durch das zweite Schieborgan (5, 25) erfolgt.

16. Verfahren gemäss einem der Ansprüche 11 bis 15, **dadurch gekennzeichnet, dass** vor dem Bewegen der Schiebevorrichtung (3, 23) von der Ausgangsposition in die Endposition ein Grössenerfassungsmittel (81) eine Grösseninformation von Stückgut (8A, 8B) im Förderbereich (2) des Hauptförderers (1) ermittelt und ein Steuermittel (82) aufgrund dieser Grösseninformation das Bewegen der Schiebevorrichtung (3, 23) von der Ausgangsposition in die Endposition auslöst oder aussetzt.

17. Verfahren gemäss einem der Ansprüche 11 bis 16, **dadurch gekennzeichnet, dass** vor dem Bewegen der Schiebevorrichtung (3, 23) von der Ausgangsposition in die Endposition ein Grössenerfassungsmittel (80) eine Grösseninformation von Stückgut (8A, 8B) in der Bestückungszone (6) ermittelt und ein Steuermittel (82) aufgrund dieser Grösseninformation das Verschieben der Schiebevorrichtung (3, 23) von der Ausgangsposition in die Endposition auslöst oder aussetzt.
